# EUROPEAN PATENT SPECIFICATION

(11) **EP 2 240 527 B1**
(45) Date of publication and mention of the grant of the patent: **28.11.2012**
(21) Application number: 09706100.6
(22) Date of filing: 26.01.2009
(51) Int. Cl.: C08G 18/42, C08G 18/48, C08G 18/63, C08G 18/36, C08G 18/40, C08G 18/65, C08G 18/66

(54) **NATURAL OIL BASED COPOLYMER POLYOLS AND POLYURETHANE PRODUCTS MADE THEREFROM**
COPOLYMER-POLYOLE AUF ERDÖLBASIS UND DARAUS HERGESTELLTE POLYURETHANPRODUKTE
POLYOLS DE COPOLYMÈRES À BASE D'HUILE NATURELLE ET PRODUITS DE POLYURÉTHANE OBTENUS À PARTIR DE CES POLYOLS

(30) Priority: 01.02.2008 US 25340 P
(43) Date of publication of application: 20.10.2010
(73) Proprietor: Dow Global Technologies LLC, Midland, MI 48674 (US)
(72) Inventor: CASATI, Francois, CH-SZ-8808 Pfaffikon (CH); VAN DER WAL, Hanno, NL-4542 BP Hoek (NL)
(74) Representative: Raynor, John
(86) International application number: PCT/US2009/031973
(87) International publication number: WO 2009/097234

(56) References cited:
- WO-A-2007/111834
- US-A1- 2004 192 795

## Description

### Background

### Field of the Invention

Embodiments of the present invention generally relate to polyurethane production; more specifically to polymer-modified polyols useful in polyurethane production.

### Description of the Related Art

Polyurethane foams are produced by the reaction of polyisocyanates and polyols. In order to improve load-bearing and other foam properties, so-called polymer polyol products have been developed. A common type of polymer polyol is a dispersion of vinyl polymer particles in a polyol. Examples of vinyl polymer particle polyols include so-called "SAN" polyols, which are dispersions of styrene-acrylonitrile. Other common types of polymer polyols are so-called "PHD" polyols (dispersions of polyurea particles) and so-called "PIPA" (polyisocyanate polyaddition) polyols (dispersions of polyurethane-urea particles). PIPA and PHD particles may be produced by introducing the appropriate monomer or monomers into a conventional petroleum-based polyol or polyol blend and reacting the monomer(s) with an isocyanate in order to polymerize the monomer(s).

Conventional polyol prices tend to fluctuate with crude oil pricing, which is becoming increasingly volatile due to dwindling proven reserves, increased global demand, and an uncertain geopolitical climate. It may therefore be desirable to replace conventional petroleum-based polyols with an alternative polyol that is based on a renewable feedstock. However, substitution of a conventional petroleum-based polyol with various types of polyols derived form renewable feedstocks is not always possible as some conventional petroleum-based polyols may not be miscible or may have low compatibility with polyols derived from a renewable resource. WO 2007/111 834 discloses polymer polyol dispersions (see examples 3-5) comprising:
- a first population of SAN based copolymer polyol. US 2004/192 795 discloses polymer polyol dispersions (see tables 1-3) comprising:
- a polyetherpolyol, - a soybean oil based polyol,
- a conventional petroleum-based polyol,
- a first population of SAN based copolymer polyol,
- a second population of PIPA polymer polyol prepared from TDI, triethanolamine and a conventional petroleum-based polyol (see also paragraphs [0040]-[0041]).

Therefore, there is a need for a method of producing polyurethane foams that result in an increased amount of renewable resources in the final polyurethane product.

### Summary

The embodiments of the present invention satisfy the needs for producing polyurethane foams that result in an increased amount of renewable resources in the final polyurethane product while also keeping desired properties of the polyurethane product. For example, described herein is a method for preparing a polyurethane foam that has a high concentration of renewable resources while retaining the load-bearing properties of the final polyurethane foam.

In one embodiment of the invention, a polymer polyol dispersion is provided which comprises
a polyol composition comprising at least one conventional petroleum-based polyol and at least one polyol derived from a natural oil,
a first particle population comprising at least one of acrylonitrile, polystyrene, methacrylonitrile, methyl methacrylate, or styrene-acrylonitrile particles dispersed in the polyol composition, and
a second particle population comprising at least one of polyurea polymer particles or polyurethane-urea particles, wherein the second particle population is formed in the presence of the at least one polyol derived from a natural oil, and is dispersed in the polyol composition.

In another embodiment, a method for forming a polymer polyol dispersion is provided, which comprises
providing a polyol composition comprising at least one conventional petroleum-based polyol and at least one polyol derived from a natural oil,
forming a first particle population, wherein the particles of the first particle population are dispersed in the polyol composition, by combining at least one of a acrylonitrile, a polystyrene, a methacrylonitrile, a methyl methacrylate or a styrene-acrylonitrile polymer polyol with the polyol composition, and
forming a second particle population comprising at least one of a polyurea polymer particle population or a polyurethane-urea particle population, wherein the second particle population is formed in the presence of the at least one polyol derived from a natural oil and wherein the second particle population is dispersed in the polyol composition.

In another embodiment, a method for forming polyurethane foam includes reacting a polymer polyol dispersion with at least one isocyanate. The polymer polyol dispersion is made by
providing a polyol composition comprising at least one conventional petroleum-based polyol and at least one polyol derived from a natural oil,
forming a first particle population, wherein the particles of the first particle population are dispersed in the polyol composition, by combining at least one of a acrylonitrile, a polystyrene, a methacrylonitrile, a methyl methacrylate or a styrene-acrylonitrile polymer polyol with the polyol composition, and
forming a second particle population comprising at least one of a polyurea polymer particle population or a polyurethane-urea particle population, wherein the second particle population is formed in the presence of the at least one polyol derived from a natural oil and wherein the second particle population is dispersed in the polyol composition.

In another embodiment, a polyurethane foam is provided. The polyurethane foam includes a reaction product of a first isocyanate and a polymer polyol dispersion. The polymer polyol dispersion comprises
a polyol composition comprising at least one conventional petroleum-based polyol and at least one polyol derived from a natural oil,
a first particle population comprising at least one of acrylonitrile, polystyrene, methacrylonitrile, methyl methacrylate, or styrene-acrylonitrile particles dispersed in the polyol composition, and
a second particle population comprising at least one of polyurea polymer particles or polyurethane-urea particles, wherein the second particle population is formed in the presence of the at least one polyol derived from a natural oil, and is dispersed in the polyol composition.

### Brief Description of the Drawings

So that the manner in which the above recited features of the present invention can be understood in detail, a more particular description of the invention, briefly summarized above, may be had by reference to embodiments, some of which are illustrated in the appended drawings. It is contemplated that elements and features of one embodiment may be beneficially incorporated in other embodiments without further recitation. It is to be noted, however, that the appended drawings illustrate only exemplary embodiments of this invention and are therefore not to be considered limiting of its scope, for the invention may admit to other equally effective embodiments.
Figure 1 is a flow diagram for a process for forming a polymer polyol according to an embodiment of the invention.
Figure 2 is a flow diagram for a process for forming a polymer polyol according to an embodiment of the invention.
Figure 3 is a chart plotting hardness data versus particle concentration of comparison polyurethane foams and polyurethane foams according to embodiments of the invention.

### Detailed Description

Embodiments of the present invention provides a polymer polyol blend which includes conventional polymer particles, such as SAN polymer particles, in a mixture of conventional petroleum-based polyols and alternative polyols based on renewable feedstocks. The polymer polyol blend also includes PIPA and/or PHD particles which have been formed in situ in the polyol blend.

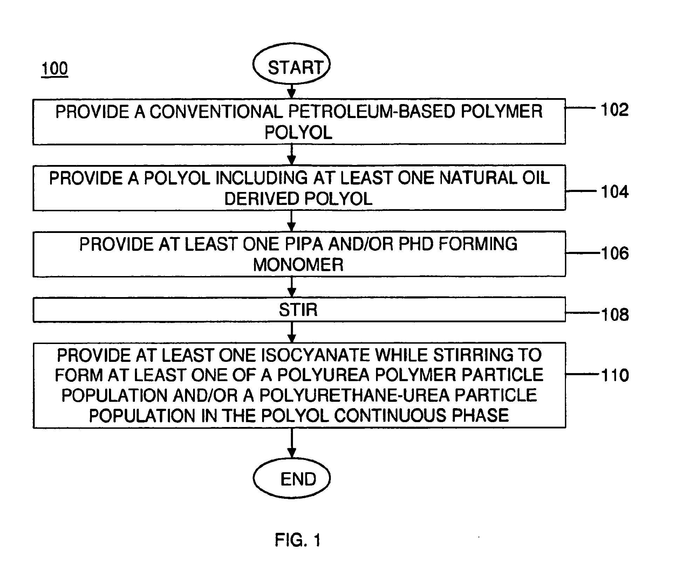

Figure 1 depicts a flow chart for a process 100, according to an embodiment of the invention. The process 100 starts at step 102, in which a conventional polymer polyol, such as styrene-acrylonitrile (SAN), acrylonitrile (ACN), polystyrene (PS), methacrylonitrile (MAN), or methyl methacrylate (MMA) polymer polyol, is provided. The polymer polyol consists of polymer particles which are dispersed in at least one conventional petroleum- based polyol. In one embodiment the polymer particles are SAN particles.

The at least one conventional petroleum-based polyol includes materials having at least one group containing an active hydrogen atom capable of undergoing reaction with an isocyanate, and not having parts of the material derived from a vegetable or animal oil. Preferred among such compounds are materials having at least two hydroxyls, primary or secondary, or at least two amines, primary or secondary, carboxylic acid, or thiol groups per molecule. Compounds having at least two hydroxyl groups or at least two amine groups per molecule are especially preferred due to their desirable reactivity with polyisocyanates.

Suitable conventional petroleum-based polyols are well known in the art and include those described herein and any other commercially available polyol. Mixtures of one or more polyols and/or one or more copolymer polyols may also be used to produce polyurethane products according to the present invention.

Representative polyols include polyether polyols, polyester polyols, polyhydroxy-terminated acetal resins, hydroxyl-terminated amines and polyamines. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double cyanide complex (DMC) catalyst such as zinc hexacyanocobaltate or quaternary phosphazenium compound.

Examples of suitable initiator molecules are water, organic dicarboxylic acids, such as succinic acid, adipic acid, phthalic acid and terephthalic acid; and polyhydric, in particular dihydric to octohydric alcohols or dialkylene glycols.

Exemplary polyol initiators include, for example, ethanediol, 1,2- and 1,3-propanediol, diethylene glycol, dipropylene glycol, 1,4-butanediol, 1,6-hexanediol, glycerol, pentaerythritol, sorbitol, sucrose, neopentylglycol; 1,2-propylene glycol; trimethylolpropane glycerol; 1,6-hexanediol; 2,5-hexanediol; 1,4-butanediol; 1,4-cyclohexane diol; ethylene glycol; diethylene glycol; triethylene glycol; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol (36 carbon diol available from Henkel Corporation); hydrogenated bisphenol; 9,9(10,10)-bishydroxymethyloctadecanol; 1,2,6-hexanetriol; and combination thereof.

The conventional petroleum-based polyols may for example be poly(propylene oxide) homopolymers, random copolymers of propylene oxide and ethylene oxide in which the poly(ethylene oxide) content is, for example, from about 1 to about 30% by weight, ethylene oxide-capped poly(propylene oxide) polymers and ethylene oxide-capped random copolymers of propylene oxide and ethylene oxide. For slabstock foam applications, such polyethers preferably contain 2-5, especially 2-4, and preferably from 2-3, mainly secondary hydroxyl groups per molecule and have an equivalent weight per hydroxyl group of from about 400 to about 3000, especially from about 800 to about 1750. For high resiliency slabstock and molded foam applications, such polyethers preferably contain 2-6, especially 2-4, mainly primary hydroxyl groups per molecule and have an equivalent weight per hydroxyl group of from about 1000 to about 3000, especially from about 1200 to about 2000. When blends of polyols are used, the nominal average functionality (number of hydroxyl groups per molecule) will be preferably in the ranges specified above. For viscoelastic foams shorter chain polyols with hydroxyl numbers above 150 are also used. For the production of semi-rigid foams, it is preferred to use a trifunctional polyol with a hydroxyl number of 30 to 80.

The polyether polyols may contain low terminal unsaturation (for example, less that 0.02 meq/g or less than 0.01 meq/g), such as those made using so-called double metal cyanide (DMC) catalysts. Polyester polyols typically contain about 2 hydroxyl -groups per molecule and have and equivalent weight per hydroxyl group of about 400-1500.

The conventional petroleum-based polymer polyols have a polymer solids content within the range of between about 1 wt.% and about 60 wt.%, preferably, between about 10 wt.% and about 40 wt.%. In one embodiment of the invention, the conventional petroleum-based polyols include SAN polymer particles. The SAN polymer polyols are typically prepared by the in situ polymerization of a mixture of acrylonitrile and styrene in a polyol. Such methods are widely known in the art. Where used, the ratio of styrene to acrylonitrile polymerized in situ in the polyol is preferably in the range of from 0:100 to 100:0 parts by weight, preferably from 80:20 to 20:80, based on the total weight of the styrene/acrylonitrile mixture. SAN polymer polyols useful in the various embodiments of the present invention preferably have hydroxyl values within the range of from 10 to 200, more preferably from 20 to 60.

In step 104 of the process 100, the polymer polyol of step 102 is combined with at least one natural oil derived polyol. The natural oil derived polyols are polyols based on or derived from renewable feedstock resources such as natural and/or genetically modified (GMO) plant vegetable seed oils and/or animal source fats. Such oils and/or fats are generally comprised of triglycerides, that is, fatty acids linked together with glycerol. Preferred are vegetable oils that have at least about 70 percent unsaturated fatty acids in the triglyceride. Preferably the natural product contains at least about 85 percent by weight unsaturated fatty acids. Examples of preferred vegetable oils include, for example, those from castor, soybean, olive, peanut, rapeseed, sesame, cotton, canola, safflower, linseed, palm, sunflower, jatropha seed oils, or a combination thereof. Additionally, non human food chain organisms such as algae may also be used. Examples of animal products include lard, beef tallow, fish oils and mixtures thereof. A combination of vegetable and animal based oils/fats may also be used.

For use in the production of flexible polyurethane foam, the natural material may be modified to give the material isocyanate reactive groups or to increase the number of isocyanate reactive groups on the material. Preferably such reactive groups are a hydroxyl group. Several chemistries can be used to prepare the natural oil derived polyols. Such modifications of a renewable resource include, for example, epoxidation, hydroxylation, sterification, hydroformylation, or alkoxylation.

After the production of such polyols by modification of the natural oils, the modified products may be further alkoxylated. The use of ethylene oxide (EO) or mixtures of EO with other oxides, introduce hydrophilic moieties into the polyol. In one embodiment, the modified product undergoes alkoxylation with sufficient EO to produce a natural oil derived polyol with between about 10 wt.% and about 60 wt.% percent EO; preferably between about 20 wt.% and about 40 wt.% EO.

In another embodiment, the natural oil derived polyols are obtained by a a multi-step process wherein the animal or vegetable oils/fats is subjected to transesterification and the constituent fatty acids recovered. This step is followed by hydroformylating carbon-carbon double bonds in the constituent fatty acids to form hydroxymethyl groups, and then forming a polyester or polyether/polyester by reaction of the hydroxymethylated fatty acid with an appropriate initiator compound.

The initiator for use in the multi-step process for the production of the natural oil derived polyols may be any of the initiators given above used in the production of the conventional petroleum-based polyols. Preferably the initiator is selected from the group consisting of neopentylglycol; 1,2-propylene glycol; trimethylolpropane; pentaerythritol; sorbitol; sucrose; glycerol; diethanolamine; alkanediols such as 1,6-hexanediol, 1,4-butanediol; 1,4-cyclohexane diol; 2,5-hexanediol; ethylene glycol; diethylene glycol, triethylene glycol; bis-3-aminopropyl methylamine; ethylene diamine; diethylene triamine; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol; hydrogenated bisphenol; 9,9(10,10)-bishydroxymethyloctadecanol; 1,2,6-hexanetriol and combination thereof. More preferably the initiator is selected from the group consisting of glycerol; ethylene glycol; 1,2-propylene glycol; trimethylolpropane; ethylene diamine; pentaerythritol; diethylene triamine; sorbitol; sucrose; or any of the aforementioned where at least one of the alcohol or amine groups present therein has been reacted with ethylene oxide, propylene oxide or mixture thereof; and combination thereof. More preferably, the initiator is glycerol, trimethylopropane, pentaerythritol, sucrose, sorbitol, and/or mixture thereof.

In one embodiment, such initiators are alkoxlyated with ethylene oxide or a mixture of ethylene and at least one other alkylene oxide to-give an-alkoxylated initiator with a molecular weight between about 200 and about 6000, preferably between about 400 and about 2000.

The natural oil derived polyols may constitute up to about 90 wt.% of polyol formulation. Usually the natural oil derived polyols constitutes at least 5%, at least 10%, at least 25%, at least 35%, at least 40, at least 50%, or at least 55 % of the total weight of the polyol component. The natural oil derived polyols may constitute 40 % or more, 50 % or more, 60 % or more, 85% or more, 90% or more, or 95% or more of the total weight of the combined polyols.

Combination of two types or more of natural oil derived polyols may also be used, either to maximize the level of seed oil in the foam formulation, or to optimize foam processing and/or specific foam characteristics, such as resistance to humid aging.

The viscosity measured at 25°C of the natural oil derived polyols is generally less than about 6,000 mPa.s. Preferably, the viscosity is less than about 5,000 mPa.s.

In step 106, at least one PHD and/or PIPA polymer forming monomer is combined with the blend from step 104. If a PHD polymer polyol is desired, the PHD forming monomers may include amines, such as ammonia, anilines and substituted anilines, and fatty amines. The PHD forming monomers may also include diamines, such as ethylenediamine, 1,6-hexamethylenediamine, alkonolamines, and hydrazine.

If a PIPA polymer polyol is desired, the PIPA forming monomers may include include diols, such as glycol; and alkanolamines, such as monoethanolamine, diethanolamine, triethanolamine, triisopropanolamine, 2-(2-aminoethoxyethanol), hydroxyethylpiperazine, monoisopropanolamine, diisopropanolamine and mixtures thereof. Other alkanolamines which may be considered include N-methylethanolamine, phenylethanolamine, and glycol amine. It is also possible to provide a mixture of PHD and PIPA forming monomers to form hybrid PHD-PIPA particles.

The at least one PHD and/or PIPA polymer forming monomers are added to the blend in a concentration of between about 2 wt.% and about 40 wt.% of the total polyol blend weight, preferably between about 5 wt.% and about 30 wt.%.

Additionally, catalysts may be combined with the blend. Catalytic quantities of organometallics may be used. Organometallic compounds useful as catalysts include those of bismuth, lead, tin, titanium, iron, antimony, uranium, cadmium, cobalt, thorium, aluminum, mercury, zinc, nickel, cerium, molybdenum, vanadium, copper, manganese, zirconium, etc. Some examples of these metal catalysts include bismuth nitrate, bismuth neodecanoate, lead 2-ethylhexoate, lead benzoate, lead oleate, dibutyltin dilaurate, tributyltin, butyltin trichloride, stannic chloride, stannous octoate, stannous oleate, dibutyltin di(2-ethylhexoate), ferric chloride, antimony trichloride, antimony glycolate, tin glycolates, iron acetyl acetonate etc. The catalyst may accelerate the reaction of diisocyanate with the primary hydroxyl groups of the alkanolamines.

In step 108, stirring is provided. However, the polyol blend may be continuously stirred throughout the process 100, and not only in step 108. Stirring may be produced in stirred reactors or by using static mixers in series, as is know in the art.

In step 110, at least one isocyanate is added to the stirring blend. Isocyanates which may be used in the present invention include aliphatic, cycloaliphatic, arylaliphatic and aromatic isocyanates.

Examples of suitable aromatic isocyanates include the 4,4'-, 2,4' and 2,2'-isomers of diphenylmethane diisocyante (MDI), blends thereof and polymeric and monomeric MDI blends, toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of isocyanates may be used, such as the commercially available mixtures of 2,4- and 2,6-isomers of toluene diisocyantes. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used.

Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane diisocyanate, saturated analogues of the above mentioned aromatic isocyanates and mixtures thereof.

The at least one isocyanate is added to the blend for an isocyanate index of between about 30 and about 150, preferably between about 50 and about 120, more preferably between about 60 and about 110. The isocyanate index is the ratio of isocyanate-groups over isocyanate-reactive hydrogen atoms present in a formulation, given as a percentage. Thus, the isocyanate index expresses the percentage of isocyanate actually used in a formulation with respect to the amount of isocyanate theoretically required for reacting with the amount of isocyanate-reactive hydrogen used in a formulation.

The at least one PHD and/or PIPA polymer forming monomers and isocyanate may be successfully reacted without the application of external heat and atmospheric pressure, although higher temperatures and pressures may also be acceptable. For example, the reaction temperature could range between about 25 °C and about 100 °C., and the pressure may range from atmospheric to about 100 psig.

The PHD and/or PIPA polymer polyols made by process 100 may have a PHD and/or PIPA polymer solids content within the range between about 1 wt.% and about 40 wt.%, preferably, between about 10 wt.% and 30 wt.%, based on the total weight of the PHD and/or PIPA polymer polyol. The PHD and/or PIPA polymer solids may have average particle size diameters below about 100 µm, preferably below about 50 µm, more preferably below about 10 µm.

Because the PHD and/or PIPA polymer solids have been formed in a polyol blend that includes at least one natural oil derived polyol, the polymer solids may have natural oil derived polyol grafted to the solid particles. Although the natural oil derived polyol may react with the isocyanate more slowly than the PHD and/or PIPA forming monomers react, a certain percentage of the total mass of the polymer solids will include the natural oil derived polyol. Additionally, upon formation of the PHD and/or PIPA polymer particles, the particles may encapsulate a certain amount of the natural oil derived polyol. On average, each polymer solid particle may include between about 1 wt.% and about 20 wt.% natural oil derived polyol. The formation of particles in the presence of the natural oil derived polyol therefore increases the amount of renewable resources used in developing the end product, as part of the PHD and/or PIPA polymer solids consists of a renewable resource.

Furthermore, many conventional polyols may not be miscible of otherwise compatible natural oil derived polyol. However, just as the PHD and/or PIPA particles may have natural oil derived polyol grafted to the solid particles, the particles may also be grafted with conventional petroleum-based polyol. Thus, because the particles include both natural oil derived polyol moieties and conventional petroleum-based moieties, the particles may enhance the miscibility of the otherwise incompatible polyols.

Another factor which enhances the miscibility of the otherwise incompatible polyols, is that as the at least one PHD and/or PIPA polymer forming monomers is being reacted with the at least one isocyanate, some of the natural oil derived polyol and/or conventional petroleum-based polyol may also be grafted with the particles of the conventional polymer polyol. Thus, as the conventional polymer polyol particles include both natural oil derived polyol moieties and conventional petroleum-based moieties an enhanced miscibility of otherwise incompatible polyols is observed.

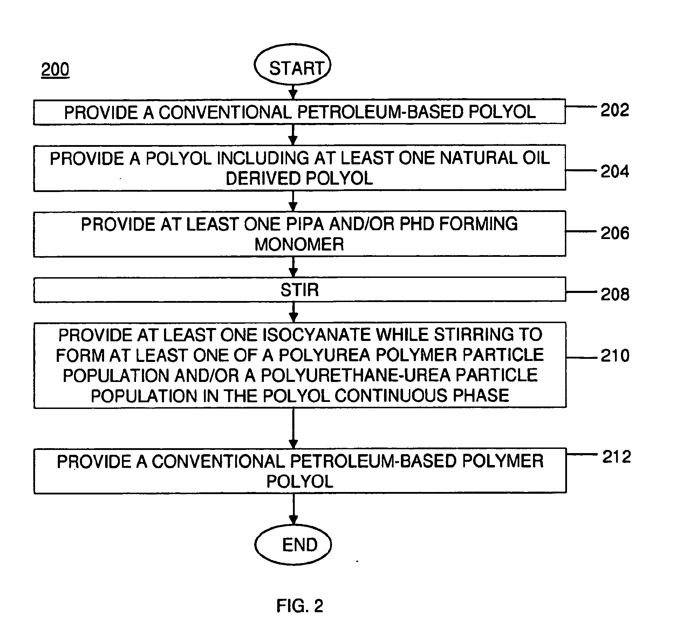

Figure 2 is a flow diagram for a process 200 for forming a polymer polyol according to another embodiment of the invention. Several of the steps of the process 200 are similar to the steps of the process 100. One difference is that in the process 100, the conventional polymer polyol is added to the final polymer polyol blend after the formation of the PIPA and/or PHD particles. Thus, in step 202, conventional petroleum-based polyol is provided. Steps 204, 206, 208, and 210 correspond to steps 104, 106, 108, and 110, respectively, of the process 100. In step 212, the conventional polymer polyol is added to the blend to complete the polymer polyol blend. In the embodiment of process 200, the conventional polymer particles may not be grafted with the natural oil derived polyol moieties. Thus, a combination of natural oil derived polyol grafted PIPA and or PHD particles and ungrafted conventional polymer particles is obtained.

The polymer polyol prepared from the above ingredients may then be incorporated into a formulation which results in a polyurethane product. The polymer polyol embodied herein may be used in conjunction with an isocyanate such as those mentioned above or may be combined with additional polyols well known in the art, and reacted with an isocyanate to form a resulting polyurethane foam product.

Among the advantages of the polyurethane foams produced with the polymer polyols described herein include providing foams that are made with a high level of renewable resources while still retaining similar load bearing properties, aging characteristics, and elasticity as foams produced using less or no renewable resources. Furthermore, flexible foams produced with the polymer polyols described herein are able to retain their elasticity, their aging characteristics, and their resistance to dynamic fatigue and humid aging. Additionally, by replacing amounts of conventional petroleum-based particles with amounts of PIPA and/or PHD particles, the resulting foam may display better flame retardant properties.

In general, the polyurethane foams are prepared by mixing an isocyanate, such as the isocyanates listed above, or combinations thereof, and the polymer polyol blend in the presence of a blowing agent, catalyst(s) and other optional ingredients as desired. Additional polyols and/or polymer polyols may also be added to the polymer polyol blend before the polymer polyol composition is reacted with the isocyanate. The conditions for the reaction are such that the polyisocyanate and polyol composition react to form a polyurethane and/or polyurea polymer while the blowing agent generates a gas that expands the reacting mixture.

The polymer polyol blend reacted with isocyanate to produce the polyurethane foam may have a concentration of a natural oil derived polyol of between about 10 wt.% and about 90 wt.%, preferably between about 20 wt.% and about 50 wt.%. In one embodiment the concentration is about 45 wt.%. The blend may have a total solids content (including SAN and PIPA and/or PHD solids) of between about 5 wt.% and about 50 wt.% or more, based on the total mass of the blend. In one embodiment the content is about 40 wt.%.

The blend may have a conventional petroleum-based particle solids content of between about 1 wt.% and about 45 wt.% or more, preferably between about 5 wt.% and about 30 wt%, based on the total mass of the blend. In one embodiment the content is about 20 wt.%.

The blend may have a PIPA and/or PHD solids content of between about 1 wt.% and about 30 wt.% or more, preferably between about 5 wt.% and about 25 wt.% based on the total mass of the blend. In one embodiment the content is about 20 wt.%.

The blend may also include one or more catalysts for the reaction of the polyol (and water, if present) with the polyisocyanate. Any suitable urethane catalyst may be used, including tertiary amine compounds, amines with isocyanate reactive groups and organometallic compounds. Exemplary tertiary amine compounds include triethylenediamine, N-methylmorpholine, N,N-dimethylcyclohexylamine, pentamethyldiethylenetriamine, tetramethylethylenediamine, bis (dimethylaminoethyl)ether, 1-methyl-4-dimethylaminoethyl-piperazine, 3-methoxy-N-dimethylpropylamine, N-ethylmorpholine, dimethylethanolamine, N-cocomorpholine, N,N-dimethyl-N',N'-dimethyl isopropylpropylenediamine, N,N-diethyl-3-diethylaminopropylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-laurate. A catalyst for the trimerization of isocyanates, resulting in a isocyanurate, such as an alkali metal alkoxide may also optionally be employed herein. The amount of amine catalysts can vary from 0.02 to 5 percent in the formulation or organometallic catalysts from 0.001 to I percent in the formulation can be used.

Additionally, it may be desirable to employ certain other ingredients in preparing polyurethane polymers. Among these additional ingredients are emulsifiers, silicone surfactants, preservatives, flame retardants, colorants, antioxidants, reinforcing agents, fillers, including recycled polyurethane foam in form of powder.

The foam may be formed by the so-called prepolymer method, in which a stoichiometric excess of the polyisocyanate is first reacted with the high equivalent weight polyol(s) to form a prepolymer, which is in a second step reacted with a chain extender and/or water to form the desired foam. Frothing methods may also be suitable. So-called one-shot methods, may also be used. In such one-shot methods, the isocyanate and all isocyanate-reactive components are simultaneously brought together and caused to react. Three widely used one-shot methods which are suitable for use herein include slabstock foam processes, high resiliency slabstock foam processes, and molded foam methods.

Slabstock foam may be prepared by mixing the foam ingredients and dispensing them into a trough or other region where the reaction mixture reacts, rises freely against the atmosphere (sometimes under a film or other flexible covering) and cures. In common commercial scale slabstock foam production, the foam ingredients (or various mixtures thereof) are pumped independently to a mixing head where they are mixed and dispensed onto a conveyor that is lined with paper or plastic. Foaming and curing occurs on the conveyor to form a foam bun. The resulting foams are typically from about from about 10 kg/m³ to 80 kg/m³, especially from about 15 kg/m³ to 60 kg/m³, preferably from about 17 kg/m³ to 50 kg/m³ in density.

A slabstock foam formulation may contain from about 3 to about 6, preferably about 4 to about 5 parts by weight water are used per 100 parts by weight high equivalent weight polyol at atmospheric pressure. At reduced pressure these levels are reduced.

High resilience slabstock (HR slabstock) foam may be made in methods similar to those used to make conventional slabstock foam but using higher equivalent weight polyols. HR slabstock foams are characterized in exhibiting a Ball rebound score of 45% or higher, per ASTM 3574.03. Water levels tend to be from about 2 to about 6, especially from about 3 to about 5 parts per 100 parts (high equivalent) by weight of polyols.

Molded foam can be made according to the invention by transferring the reactants (polyol composition including copolyester, polyisocyanate, blowing agent, and surfactant) to a closed mold where the foaming reaction takes place to produce a shaped foam. Either a so-called "cold-molding" process, in which the mold is not preheated significantly above ambient temperatures, or a "hot-molding" process, in which the mold is heated to drive the cure, can be used. Cold-molding processes are preferred to produce high resilience molded foam. Densities for molded foams generally range from 30 to 50 kg/m³.

The applications for foams produced by processes described herein are those known in the industry. Flexible, semi-rigid and viscoelastic foams find use in applications such as furniture, shoe soles, automobile seats, sun visors, steering wheels, packaging applications, armrests, door panels, noise insulation parts, other cushioning and energy management applications, carpet backing, dashboards and other applications for which conventional flexible polyurethane foams are used. Other applications include coatings, adhesives, and elastomers.

### Examples

The following examples are provided to illustrate the embodiments of the invention, but are not intended to limit the scope thereof. All parts and percentages are by weight unless otherwise indicated.

The following materials were used:

| | |
|---|---|
| SPECFLEX^{®} NC 700: | A grafted polyether polyol containing 40 % copolymerized styrene and acrylonitrile (SAN). Available from The Dow Chemical Company. |
| SPECFLEX^{®} NC 630E: | A high functionality capped polyol with a Hydroxyl number of between 29.0 and 33.0. Available from The Dow Chemical Company. |
| HMPP A: | Soybean oil based polyol prepared according to examples 19-22 of WO 2004/096882 having an OH number of 89. |
| Triethanolamine: | Available from the Sigma-Aldrich Co. |
| VORANATE^{®} T-80: | A toluene diisocyanate composition available from The Dow Chemical Company. |
| DABCO^{®} T-12: | A tin catalyst available from Air Products. |
| Diethanolamine: | Available from the Sigma-Aldrich Co. |
| NIAX^{®} A-1: | A tertiary amine catalyst available from Momentive Performance Materials. |
| DABCO^{®} 33LV: | A 33% solution of Triethylenediamine in propylene glycol available from Air Products & Chemicals Inc. |
| NIAX^{®} A-300: | A tertiary amine catalyst available from Momentive Performance Materials. |
| TEGOSTAB^{®} B 8715LF: | A silicone-based surfactant available from Degussa-Goldschmidt Corporation. |

### Example 1, Soy based PIPA polyol blend

A soy based PIPA polyol blend (E1) is made by combining SPECFLEX^{®} NC 700 (about 45 %) with HMPP A (about 45 %), triethanolamine (about 4.7%), and DABCO^{®} T-12 (about 0.02 %). The combination is stirred for about five minutes at about 1000 rpm. With continued stirring, VORANATE^{®} T-80 (about 5.3%) is added and .the mixture is stirred for another 10 minutes. The mixture is then let to cool off. The resulting soy based PIPA polyol blend has a viscosity at 25 °C of 14000 mP·as as measured by using a Brookfield viscometer, spindle # LVVT3, speed 12, in accordance with ASTM D-4878-03. The soy based PIPA polyol blend is a white creamy liquid showing no phase separation after several weeks of storage at room temperature.

### Examples 2 - 4 and comparison examples 1-4

Two types of foam are produced. Comparative examples 1-4 (C1 - C4) are produced using polyol blends that includes only conventionally produced SAN particles, while Examples 2 and 3 are produced using polyol blends that includes conventionally produced SAN particles and the soy based PIPA polyol blend (E1).

All polyurethane foam examples (C1 - C4, E2, and E3) are made using polyols given in Tables 1 and 2. Additional ingredients for all the examples are: Voranate T-80 at index 85, water (3.5 PHP), Diethanolamine (0.7 PHP), Niax A-1 (0.05 PHP), Dabco 33 LV (0.3 PHP), Niax A-300 (0.1 PHP), and Tegostab B 8715LF (0.6 PHP). The foams are made in the laboratory by preblending the polyols, the surfactants, the crosslinkers, the catalysts and the water, all conditioned at 25 °C. The VORANATE^{®} T-80 is also conditioned at 25°C, and is reacted with the polyol preblend to produce a foam.

**Table 1**

| | (C1) | (C2) | (C3) | (C4) |
|---|---|---|---|---|
| | | | | |
| HMPP A | 30 | 30 | 30 | 30 |
| SPECFLEX^{®} NC 700 | 10 | 20 | 30 | 40 |
| SPECFLEX^{®} NC 630E | 60 | 50 | 40 | 30 |
| Soy based PIPA polyol blend | | | | |
| | | | | |
| % Solids | 4 | 8 | 12 | 16 |
| % renewable resource in polyol blend | 21 | 21 | 21 | 21 |
| Density (kg/m³) | 36.6 | 37.6 | 36.4 | 36.8 |
| 50 % CFD (KPa) | 3.8 | 4.4 | 4.9 | 5.6 |
| 75 % CS (%CD) | 10.3 | 12.7 | 12.1 | 13.1 |

**Table 2**

| | (E2) | (E3) | (E4) |
|---|---|---|---|
| | | | |
| HMPP A | 30 | 25 | 30 |
| SPECFLEX^{®} NC 700 | 10 | 5 | 10 |
| SPECFLEX^{®} NC 630E | 55 | 60 | 40 |
| Soy based PIPA polyol blend | 5 | 10 | 20 |
| | | | |
| % Solids | 5.5 | 5 | 10 |
| % renewable resource in polyol blend | 22.6 | 24.5 | 27 |
| Density (kg/m3) | 36.8 | 36.8 | 34.2 |
| 50 % CFD (KPa) | 4.0 | 3.9 | 4.7 |
| 75 % CS (%CD) | 11.9 | 11.7 | 17.5 |

The foam pads produced in examples 2-4 have no visible skin defects, have a fine cell structure comparable to the comparative examples (C1 - C4), and demolds well after 5 minutes.

Table 1 also indicates the total amounts of total amounts of solids (SAN and soy based PIPA) of the total polyol blends. It can be seen that the physical properties of the resulting foams are comparable to that of the control foams which do not include the soy based PIPA polyol blend. By using the soy based PIPA polyol blend it can be seen that the level of renewable resources in the foam increases as compared to the comparison examples.

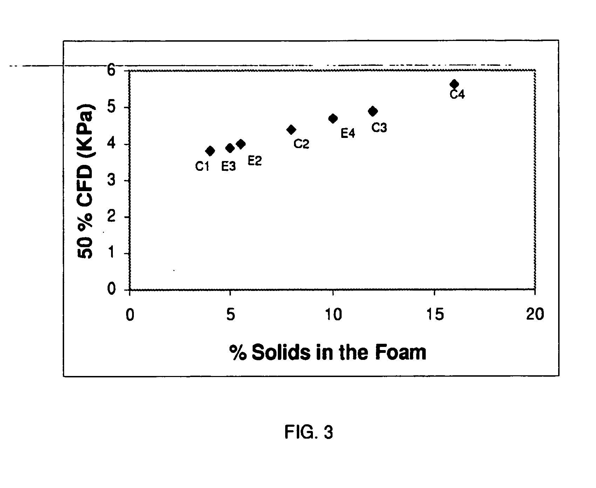

Figure 3 is a chart plotting hardness data (50% CFD) versus particle concentration of the foams. The hardness is measured using the Peugeot D-41-1003-86 test procedure. As seen in the chart, a linear relationship exists between the hardness and the concentration of particles in the foam. This linear trend indicates that the soy based PIPA result in comparative hardness results as when using only SAN particles in the foam.

The 75% compression set is-measured according to the ASTM-3574-95 test method. The the values obtained are comparable to the standards for the industry, and indicate low compression set values which confirm their satisfactory aging characteristic.

While the foregoing is directed to embodiments of the present invention, other and further embodiments of the invention may be devised without departing from the basic scope thereof, and the scope thereof is determined by the claims that follow.

## Claims

1. A polymer polyol dispersion , comprising:
a polyol composition comprising at least one conventional petroleum-based polyol and at least one polyol derived from a natural oil,
a first particle population comprising at least one of acrylonitrile, polystyrene, methacrylonitrile, methyl methacrylate, or styrene-acrylonitrile particles dispersed in the polyol composition, and
a second particle population comprising at least one of polyurea polymer particles or polyurethane-urea particles, wherein the second particle population is formed in the presence of the at least one polyol derived from a natural oil, and is dispersed in the polyol composition.

2. The polymer polyol dispersion of claim 1, wherein at least one of the first particle population and the second particle population comprises particles grafted with the at least one polyol derived from a natural oil.

3. The polymer polyol dispersion of claim 2, wherein at least one of the first particle population and the second particle population comprises particles further grafted with the at least one conventional petroleum-based polyol.

4. The polymer polyol dispersion of any one of claims 1 - 3, wherein the second particle population comprises the at least one polyol derived from a natural oil at a concentration of between about 1 wt.% and about 20 wt.% of the total weight of the second particle population.

5. The polymer polyol dispersion of any one of claims 1 - 4, wherein the polyol composition has a concentration of the at least one polyol derived from a natural oil of between about 10 wt.% and about 90 wt.% of the total polymer polyol dispersion weight.

6. The polymer polyol dispersion of any one of claims 1 - 5, wherein the first particle population comprises between about 1 wt.% and about 45 wt.% of the total polymer polyol dispersion weight.

7. A polyurethane foam, comprising a reaction product of at least:
an isocyanate; and
the polymer polyol dispersion of any one of claims 1 - 6.

8. A method of forming a polymer polyol dispersion, comprising:
providing a polyol composition comprising at least one conventional petroleum-based polyol and at least one polyol derived from a natural oil,
forming a first particle population, wherein the particles of the first particle population are dispersed in the polyol composition, by combining at least one of a acrylonitrile, a polystyrene, a methacrylonitrile, a methyl methacrylate or a styrene-acrylonitrile polymer polyol with the polyol composition, and
forming a second particle population comprising at least one of a polyurea polymer particle population or a polyurethane-urea particle population, wherein the second particle population is formed in the presence of the at least one polyol derived from a natural oil and wherein the second particle population is dispersed in the polyol composition.

9. The method of claim 8, wherein the forming at least one of a polyurea polymer particle population or a polyurethane-urea particle population comprises:
combining monomers of at least one of a diamine, ammonia, a hydrazine, a glycol, or alkanolamine with the at least one of a acrylonitrile, a polystyrene, a methacrylonitrile, a methyl methacrylate or a styrene-acrylonitrile polymer polyol and the polyol blend,
stirring the polyol blend; and
adding at least one first isocyanate to the polyol blend while stirring.

10. The method of any one of claims 8 and 9, wherein the forming at least one of a polyurea polymer particle population or a polyurethane-urea particle population in the polyol comprises the formation of particles grafted with the at least one polyol derived from a natural oil.

11. The method of claim of any one of claims 8 - 10, wherein the forming at least one of a polyurea polymer particle population or a polyurethane-urea particle population in the polyol comprises the formation of particles grafted with the at least one conventional petroleum-based polyol.

12. The method of any one of claims 8 - 11, further comprising grafting the particles of the at least one of a acrylonitrile, a polystyrene, a methacrylonitrile, a methyl methacrylate or a styrene-acrylonitrile polymer polyol with the at least one conventional petroleum-based polyol and at least one polyol derived from a natural oil.

13. The method of any one of claims 8 - 12, wherein the polyol has a concentration of the at least one polyol derived from a natural oil of between about 10 wt.% and about 90 wt.% of the total polymer polyol dispersion weight.

14. The method of any one of claims 8 - 13, wherein the polymer polyol dispersion comprises particles in an amount of between about 5 wt.% and about 50 wt.% of the total polymer polyol dispersion weight.

15. The method of any one of claims 8 - 14, wherein the polymer polyol dispersion comprises a particle population of styrene-acrylonitrile particles in a concentration of between about 1 wt.% and about 45 wt.% of the total polymer polyol dispersion weight.

16. A method for producing a polyurethane foam, comprising:
reacting at least:
the polymer polyol dispersion of any one of claims 8 - 15,
with at least one second isocyanate to form a polyurethane foam.

## Patentansprüche

1. Polymerpolyoldispersion, die Folgendes umfasst:
eine Polyolzusammensetzung, die mindestens ein herkömmliches erdölbasiertes Polyol und mindestens ein aus einem natürlichen Öl gewonnenes Polyol umfasst,
eine erste Partikelpopulation, die mindestens eines von Acrylnitril-, Polystyrol-, Methacrylnitril-, Methylmethacrylat- oder Styrol-Acrylnitril-Partikeln umfasst, die in der Polyolzusammensetzung dispergiert sind, und
eine zweite Partikelpopulation, die mindestens eines von Polyharnstoffpolymerpartikeln oder Polyurethan-Harnstoff-Partikeln umfasst, wobei die zweite Partikelpopulation in Gegenwart des mindestens einen aus einem natürlichen Öl gewonnenen Polyols gebildet ist und in der Polyolzusammensetzung dispergiert ist.

2. Polymerpolyoldispersion nach Anspruch 1, wobei mindestens eine von der ersten Partikelpopulation und der zweiten Partikelpopulation Partikel umfasst, die mit dem mindestens einen aus einem natürlichen Öl gewonnenen Polyol gepfropft sind.

3. Polymerpolyoldispersion nach Anspruch 2, wobei mindestens eine von der ersten Partikelpopulation und der zweiten Partikelpopulation Partikel umfasst, die ferner mit dem mindestens einen herkömmlichen erdölbasierten Polyol gepfropft sind.

4. Polymerpolyoldispersion nach einem der Ansprüche 1-3, wobei die zweite Partikelpopulation das mindestens eine aus einem natürlichen Öl gewonnene Polyol in einer Konzentration von zwischen etwa 1 Gew.-% und etwa 20 Gew.-% des Gesamtgewichts der zweiten Partikelpopulation umfasst.

5. Polymerpolyoldispersion nach einem der Ansprüche 1-4, wobei die Polyolzusammensetzung eine Konzentration des mindestens einen aus einem natürlichen Öl gewonnenen Polyols von zwischen etwa 10 Gew.-% und etwa 90 Gew.-% des Gesamtgewichts der Polymerpolyoldispersion hat.

6. Polymerpolyoldispersion nach einem der Ansprüche 1-5, wobei die erste Partikelpopulation zwischen etwa 1 Gew.-% und etwa 45 Gew.-% des Gesamtgewichts der Polymerpolyoldispersion umfasst.

7. Polyurethanschaumstoff, der ein Reaktionsprodukt von mindestens:
einem Isocyanat, und
der Polymerpolyoldispersion nach einem der Ansprüche 1-6 umfasst.

8. Verfahren zur Bildung einer Polymerpolyoldispersion nach Anspruch 1, mit den folgenden Schritten:
Bereitstellen einer Polyolzusammensetzung, die mindestens ein herkömmliches erdölbasiertes Polyol und mindestens ein aus einem natürlichen Öl gewonnenes Polyol umfasst,
Bilden einer ersten Partikelpopulation, wobei die Partikel der ersten Partikelpopulation in der Polyolzusammensetzung dispergiert werden, indem mindestens eines von einem Acrylnitril, einem Polystyrol, einem Methacrylnitril, einem Methylmethacrylat oder einem Styrol-Acrylnitril-Polymerpolyol mit der Polyolzusammensetzung kombiniert wird, und
Bilden einer zweiten Partikelpopulation, die mindestens eine von einer Polyharnstoffpolymer-Partikelpopulation oder einer Polyurethan-Harnstoff-Partikelpopulation umfasst, wobei die zweite Partikelpopulation in Gegenwart des mindestens einen aus einem natürlichen Öl gewonnenen Polyols gebildet wird und wobei die zweite Partikelpopulation in der Polyolzusammensetzung dispergiert wird.

9. Verfahren nach Anspruch 8, wobei das Bilden mindestens einer von einer Polyharnstoffpolymer-Partikelpopulation oder einer Polyurethan-Harnstoff-Partikelpopulation Folgendes umfasst:
Kombinieren von Monomeren von mindestens einem von einem Diamin, Ammoniak, einem Hydrazin, einem Glycol oder Alkanolamin mit dem mindestens einen von einem Acrylnitril, einem Polystyrol, einem Methacrylnitril, einem Methylmethacrylat oder einem Styrol-Acrylnitril-Polymerpolyol und der Polyolmischung,
Rühren der Polyolmischung; und
Zugabe mindestens eines ersten Isocyanats zu der Polyolmischung unter Rühren.

10. Verfahren nach einem der Ansprüche 8 und 9, wobei das Bilden mindestens einer von einer Polyharnstoffpolymer-Partikelpopulation oder einer Polyurethan-Harnstoff-Partikelpopulation in dem Polyol die Bildung von Partikeln umfasst, die mit dem mindestens einen aus einem natürlichen Öl gewonnenen Polyol gepfropft sind.

11. Verfahren nach einem der Ansprüche 8-10, wobei das Bilden mindestens einer von einer Polyharnstoffpolymer-Partikelpopulation oder einer Polyurethan-Harnstoff-Partikelpopulation in dem Polyol die Bildung von Partikeln umfasst, die mit dem mindestens einen herkömmlichen erdölbasierten Polyol gepfropft sind.

12. Verfahren nach einem der Ansprüche 8-11, bei dem ferner die Partikel des mindestens einen von einem Acrylnitril, einem Polystyrol, einem Methacrylnitril, einem Methylmethacrylat oder einem Styrol-Acrylnitril-Polymerpolyol mit dem mindestens einen herkömmlichen erdölbasierten Polyol und mindestens einem aus einem natürlichen Öl gewonnenen Polyol gepfropft werden.

13. Verfahren nach einem der Ansprüche 8-12, wobei das Polyol eine Konzentration des mindestens einen aus einem natürlichen Öl gewonnenen Polyols von zwischen etwa 10 Gew.-% und etwa 90 Gew.-% des Gesamtgewichts der Polymerpolyoldispersion hat.

14. Verfahren nach einem der Ansprüche 8-13, wobei die Polymerpolyoldispersion Partikel in einer Menge von zwischen etwa 5 Gew.-% und etwa 50 Gew.-% des Gesamtgewichts der Polymerpolyoldispersion umfasst.

15. Verfahren nach einem der Ansprüche 8-14, wobei die Polymerpolyoldispersion eine Partikelpopulation von Styrol-Acrylnitril-Partikeln in einer Konzentration von zwischen etwa 1 Gew.-% und etwa 45 Gew.-% des Gesamtgewichts der Polymerpolyoldispersion umfasst.

16. Verfahren zur Herstellung eines Polyurethanschaumstoffs, mit den folgenden Schritten:
Umsetzen von mindestens:
der Polymerpolyoldispersion nach einem der Ansprüche 8-15,
mit mindestens einem zweiten Isocyanat, um einen Polyurethanschaumstoff zu bilden.

## Revendications

1. Dispersion polymères-polyols, comprenant :
- une composition de polyols, comprenant au moins un polyol conventionnel à base de pétrole et au moins un polyol dérivé d'une huile naturelle ;
- une première population de particules, comprenant des particules d'au moins une sorte parmi des particules de polymère de type polyacrylonitrile, polystyrène, polyméthacrylonitrile, poly(méthacrylate de méthyle) ou poly(styrène/acrylonitrile), qui sont dispersées dans la composition de polyols ;
- et une deuxième population de particules, comprenant des particules d'au moins une sorte parmi des particules de polymère polyurée et des particules de polyuréthane-polyurée, laquelle deuxième population de particules a été formée en présence du polyol dérivé d'une huile naturelle au nombre d'au moins un, et se trouve dispersée dans la composition de polyols.

2. Dispersion polymères-polyols, conforme à la revendication 1, dans laquelle au moins l'une des première et deuxième populations de particules comprend des particules sur lesquelles est greffé le polyol dérivé d'une huile naturelle au nombre d'au moins un.

3. Dispersion polymères-polyols, conforme à la revendication 2, dans laquelle au moins l'une des première et deuxième populations de particules comprend des particules sur lesquelles est en outre greffé le polyol conventionnel à base de pétrole au nombre d'au moins un.

4. Dispersion polymères-polyols, conforme à l'une des revendications 1 à 3, dans laquelle la deuxième population de particules comprend du polyol dérivé d'une huile naturelle au nombre d'au moins un en une proportion d'environ 1 % à environ 20 %, en poids rapporté au poids total de la deuxième population de particules.

5. Dispersion polymères-polyols, conforme à l'une des revendications 1 à 4, dans laquelle la composition de polyols contient du polyol dérivé d'une huile naturelle au nombre d'au moins un en une proportion d'environ 10 % à environ 90 %, en poids rapporté au poids total de la dispersion polymères-polyols.

6. Dispersion polymères-polyols, conforme à l'une des revendications 1 à 5, dans laquelle la première population de particules représente d'environ 1 % à environ 45 % du poids total de la dispersion polymères-polyols.

7. Mousse de polyuréthane, comprenant un produit de réaction d'au moins :
- un isocyanate,
- et une dispersion polymères-polyols conforme à l'une des revendications 1 à 6.

8. Procédé de préparation d'une dispersion polymères-polyols conforme à la revendication 1, qui comporte les étapes suivantes :
- se procurer une composition de polyols comprenant au moins un polyol conventionnel à base de pétrole et au moins un polyol dérivé d'une huile naturelle ;
- former une première population de particules, première population dont les particules sont dispersées dans la composition de polyols, en combinant au moins une dispersion polymère-polyol de polyacrylonitrile, de polystyrène, de polyméthacrylonitrile, de poly(méthacrylate de méthyle) ou de poly(styrène/acrylonitrile) avec la composition de polyols ;
- et former une deuxième population de particules, comprenant au moins l'une d'une population de particules de polymère polyurée et d'une population de particules de polyuréthane-polyurée, laquelle deuxième population de particules est formée en présence du polyol dérivé d'une huile naturelle au nombre d'au moins un, et laquelle deuxième population de particules est dispersée dans la composition de polyols.

9. Procédé conforme à la revendication 8, dans lequel l'étape de formation d'au moins l'une d'une population de particules de polymère polyurée et d'une population de particules de polyuréthane-polyurée comporte les opérations suivantes :
- combiner des monomères d'au moins l'un des types diamine, ammoniac, hydrazine, glycol et alcanolamine avec la dispersion polymère-polyol, au nombre d'au moins une, de polyacrylonitrile, de polystyrène, de polyméthacrylonitrile, de poly(méthacrylate de méthyle) ou de poly(styrène/acrylonitrile) et le mélange de polyols ;
- brasser le mélange de polyols ;
- et ajouter au moins un premier isocyanate au mélange de polyols, tout en brassant le tout.

10. Procédé conforme à l'une des revendications 8 et 9, dans lequel l'étape de formation d'au moins l'une d'une population de particules de polymère polyurée et d'une population de particules de polyuréthane-polyurée dans les polyols comprend le fait de former des particules sur lesquelles est greffé le polyol dérivé d'une huile naturelle au nombre d'au moins un.

11. Procédé conforme à l'une des revendications 8 à 10, dans lequel l'étape de formation d'au moins l'une d'une population de particules de polymère polyurée et d'une population de particules de polyuréthane-polyurée dans les polyols comprend le fait de former des particules sur lesquelles est greffé le polyol conventionnel à base de pétrole au nombre d'au moins un.

12. Procédé conforme à l'une des revendications 8 à 11, qui comporte en outre le fait de greffer, sur les particules de la dispersion polymère-polyol, au nombre d'au moins une, de polyacrylonitrile, de polystyrène, de polyméthacrylonitrile, de poly(méthacrylate de méthyle) ou de poly(styrène/acrylonitrile), le polyol conventionnel à base de pétrole au nombre d'au moins un et au moins un polyol dérivé d'une huile naturelle.

13. Procédé conforme à l'une des revendications 8 à 12, dans lequel le polyol contient du polyol dérivé d'une huile naturelle au nombre d'au moins un en une proportion d'environ 10 % à environ 90 %, en poids rapporté au poids total de la dispersion polymères-polyols.

14. Procédé conforme à l'une des revendications 8 à 13, dans lequel la dispersion polymères-polyols contient des particules en une quantité qui représente d'environ 5 % à environ 50 % du poids total de la dispersion polymères-polyols.

15. Procédé conforme à l'une des revendications 8 à 14, dans lequel la dispersion polymères-polyols contient une population de particules de poly(styrène-acrylonitrile) en une quantité qui représente d'environ 1 % à environ 45 % du poids total de la dispersion polymères-polyols.

16. Procédé de production d'une mousse de polyuréthane, qui comporte le fait de faire réagir
- au moins une dispersion polymères-polyols de l'une des revendications 8 à 15,
- avec au moins un deuxième isocyanate, de manière à ce qu'il se forme une mousse de polyuréthane.
